# EUROPEAN PATENT SPECIFICATION

(11) **EP 3 763 591 B1**
(45) Date of publication and mention of the grant of the patent: **09.03.2022**
(21) Application number: 20185380.1
(22) Date of filing: 10.07.2020
(51) Int. Cl.: B61B 12/00

(54) **SKI LIFT CHAIR WITH HEATING SUSBSYSTEM AND CONTROL METHOD FOR HEATING SUBSYSTEM OF SKI LIFT CHAIR**
SKILIFT-SESSEL MIT HEIZSYSTEM UND STEUERUNGSVERFAHREN FÜR DAS HEIZSYSTEM DES SKILIFT-SESSELS
FAUTEUIL DE REMONTÉE MÉCANIQUE AVEC SOUS-SYSTÈME DE CHAUFFAGE ET MÉTHODE DE CONTRÔLE POUR LE SOUS-SYSTÈME DE CHAUFFAGE DU FAUTEUIL DE REMONTÉE MÉCANIQUE

(30) Priority: 12.07.2019 PL 43056119
(43) Date of publication of application: 13.01.2021
(73) Proprietor: "Osrodek Narciarski Kotelnica Bialczanska" spolka z ograniczona odpowiedzialnoscia, 34-405 Bialka Tatrzanska (PL)
(72) Inventor: Zielinski, Wojciech, 31-514 Krakow (PL); Sitek, Radoslaw, 31-232 Krakow (PL); Czaja, Piotr, 34-450 Kroscienko nad Dunajcem (PL); Karpiel, Grzegorz, 31-841 Krakow (PL)
(74) Representative: Bury & Bury

(56) References cited:
- EP-A1- 2 578 466
- WO-A1-2016/049550
- CH-B1- 700 020
- US-A1- 2006 060 104
- US-A1- 2008 282 928

## Description

Present invention concerns a ski lift chair provided with a heating system and a method for controlling a heating system of a ski lift chair.

From the American patent application publication no. US20080282928A1 there is known a heated ski lift chair provided with elements heating a passenger's hands. The ski chair is provided with a first power source comprising a photovoltaic cell and a second power source - a battery. A disadvantage of this solution is a troublesome battery charging under conditions in which incident solar radiation (insolation) is insufficient. Such charging would require an additional infrastructure, because a battery capacity suitable for placing on the ski chairs is insufficient for the whole day, and a charging speed is insufficient for charging in short time intervals near stations, where a power supply can be easily provided.

In the European patent application published under no. EP3197740, a use of supercapacitors as electrical energy storages in ski lift chairs without a power supply is disclosed. Those supercapacitotrs are charged in designated areas and they are storing the electric energy, used while in motion when there is no access to external power sources. The chairs are provided with wire connectors or wireless connectors, enabling connecting - drawing energy from external power supply systems during the move of the chair. In the invention description an application of an electrical energy stored in supercapacitors i.a. for power supplying to heaters is disclosed. A disadvantage of this solution is that the heater and controlling elements are powered from one power source. Such solution does not provide sufficient energy resources to ensure a comfort during longer routes and it is

ENGLISH TRANSLATION OF SPECIFIACTION 2020-08-18 connected with a risk of cutting off a controlling system from the electric energy during a fast discharge.

The objective of the invention is to provide a ski lift chair with a safe and reliable heating system of hands operating without external power supply during breaks between charging in charging points.

A ski lift chair comprising a seat with a seat back and a rail, provided with a heating system with an electric heater according to the invention is characterized in that the heating system is provided with a channel, comprising a fan powered by an engine and traced in at least one part of the rail via a region adapted for giving a support to hands. The heater is placed in a chamber, comprising a medium with a high heat capacity, via which runs the channel which has at least one bimetallic thermal valve. Such configuration enables to separate the medium in the chamber which is heated to a temperature exceeding a comfort temperature, or even threatening burn injuries of hands and bodies of the passengers, and consequnetly ensures their safety. Even if air in the channel will heat up to the temperature threatening the comfort or health, a circulation thereof will be cut off by the thermal valve. In said chamber a first temperature sensor is placed, and in said region a second temperature sensor is placed. Furthermore the heating system is provided with a measurement-control system, connected to the first temperature sensor, to the second temperature sensor and to the engine. The measurement-control system is powered from a power back up system comprising a battery of supercapacitors. The power back up system is connected to a charging system provided with a connector connectable to external power supply systems while ski lift chair is in motion. The heater is connected to the charging system and to the power back up system via a circuit comprising a controlled key connected to the measurement-control system. Such configuration enables, in short time intervals in which the charging system is connected to a ski lift infrastructure, storing thermal energy in the chamber and charging the power back up system. During motion of the chair, after disconnecting the power, a possibility of regulating a rate of a heat consumption from the chamber by regulation of engine speed is obtained, pursuant to displays of the temperature sensors. In a situation when energy reserve remains, they can be used for heating up the heater from a power back up system.

Preferably, the chair is provided with a resistance wire, provided in the region, connected to the power back up system via a second key controlled from the measurement-control system. In such configuration the electric energy reserve can be provided directly to the region, not via the heater, neither the channel nor the fan.

Preferably the chamber is placed under the seat or behind the seat back, so that it is completely isolated from the passengers, both during a ride and during a boarding and an alighting.

In a method for controlling a heating system of a ski lift chair to maintain a set temperature, according to the invention, a ski chair according to the invention is used and a measurement-control system reads a temperature from the first sensor and the second sensor. Engine is switched on when the reading of the temperature from the first temperature sensor is higher than a pre-defined value whereas the reading from the second temperature sensor is lower than the set temperature.

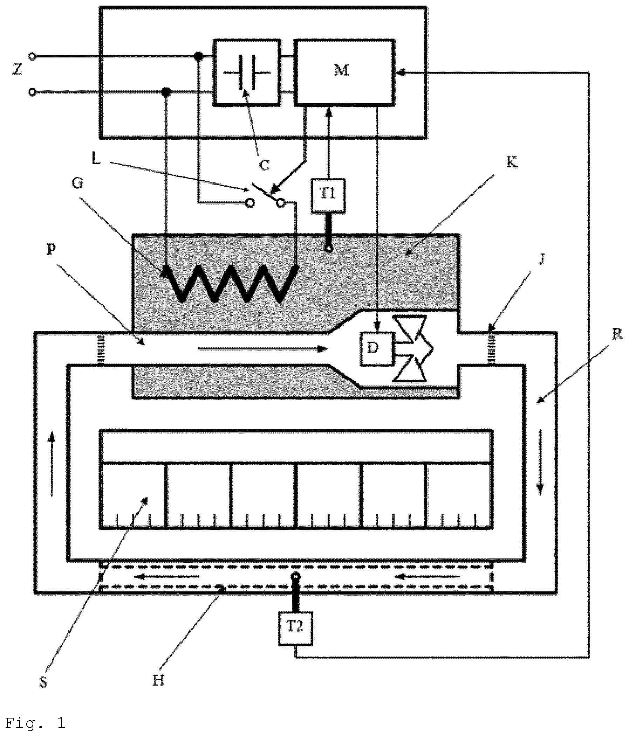

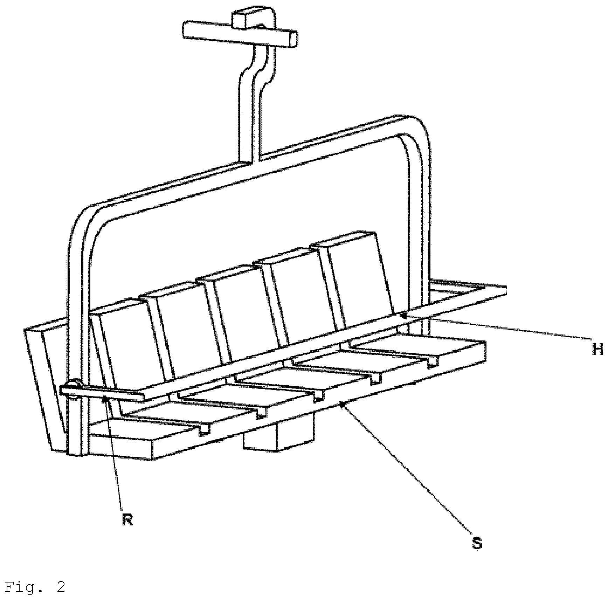

Embodiment of the invention has been described with reference to the drawings, wherein Fig. 1 shows a schematic diagram of the heating system in the chair according to the invention, while Fig. 2 shows the chair with the heating system installed.

The ski lift chair in the embodiment of the invention is shown in Fig. 2. The chair comprises a seat S with the seat back and a rail R with a heated region H providing the support to hands. Via the rail R with the region H runs a channel P of the heating system for guiding hot air.

The schematic diagram of the chair with the heating system is shown in Fig. 1. The heating system is provided with an electric heater G placed in the chamber K, located under the seat, comprising a slack wax, which is the medium with the high heat capacity. The heating system is provided with the channel P, comprising the fan powered by the engine D and traced via the rail R. The channel P comprises rotary joints enabling connection to the rail R. Inside the rail, the channel P is traced via the region H adapted for giving the support to hands. In the channel two bimetallic thermal valves are provided - thermostats at the input and at the output.

As a filling of the chamber different mediums with the high heat capacity can be used, including typical, although due to temperature range and working conditions a water will be a rather troublesome solution. Both conventional substances as well as PMC mediums (*phase-change materials*) can be used, enabling additionally a utilisation of an energy of phase transitions. For the latter, which includes also the slack wax, higher capacities at small weight are obtained.

The first temperature sensor T1 is placed in the chamber K, and the second temperature sensor T2 is placed in the region H.

Both sensors are connected to the measurement-control system M by a wired connection in the standard I2C providing an error-resistance in a wide range of working conditions. Also other connections are permitted, including wireless. The measurement-control system M provides a control signal and powering of the engine D, which drives the fan placed in the channel P. In this way, the measurement-control system M is used for regulation of the rate of a heat consumption from the chamber K.

The measurement-control system M is powered from the power back up system C, comprising a battery of supercapacitors and connected to a charging system Z having a connector connectable to external power supply while the chair is in motion.

The heater G is connected to the charging system Z and to the power back up system S via a circuit comprising a controlled key L connected to the measurement-control system M.

Additionally the region H can be provided with a heating resistance wire connected (not shown in the drawings) to the power back up system C via a second key controlled from the measurement-control system M. Such solution enables providing a possible excess of the electric energy directly to the region H in conditions, in which the thermal energy stored in the chamber K will prove to be insufficient.

The chamber K, due to its fast heating, should be placed out of the range of the passengers - advantageously under the seat S or behind the seat back.

The system according to the invention enables temperature regulation to a given value in a simple way - by means of the fan controlled by the engine D and the first and the second temperature sensors. By means of the measurement-control system M the temperature from the first temperature sensor T1 and from the second temperature sensor T2 is read and the engine D is switched on, when the reading of the temperature from the first temperature sensor T1 is higher than the pre-defined value and the reading from the second temperature sensor T2 is lower than the set temperature. If the reading from the sensor T1 falls below the pre-defined value it means that the thermal energy is running out and spending the energy on a move of the engine D is unreasonable. Then if the chair is provided with the resistance wire, and still there is an electric energy reserve, it can be used for heating the region H directly by the resistance wire.

An optimal pre-defined temperature value depends on the chair size and the channel length. In most constructions tested by the inventors this value was in the range from 20 to 40° C.

The invention provides the ski lift chair with safe and reliable system for heating hands, which can be powered by dedicated systems in chosen regions, e.g. on the stations, thanks to what the bigger changes in infrastructure are avoided. The storage of the energy in the form of heat and not just only in the form of the electric energy, enables to store it more and use it more effectively. The use of the channel enables to move away the energy storage from the passengers and to reduce the risk of burn injuries.

## Claims

1. A ski lift chair comprising a seat (S) with a seat back and a rail (R), provided with a heating system with an electric heater (G), **characterised in that**
the heating system is provided with a channel (P), comprising a fan powered by an engine (D) and said channel (P) runs inside at least part of the rail (R) via a region (H), adapted for giving a support to hands,
the heater (G) is placed in a chamber (K), comprising a medium with a high heat capacity, wherein via said chamber (K) runs the channel (P) which has at least one bimetallic thermal valve,
in the chamber (K) it has a first temperature sensor (T1),
in the region (H) it has a second temperature sensor (T2),
and furthermore the heating system is provided with a measurement-control system (M),
connected to the first temperature sensor (T1), to the second temperature sensor (T2) and to the engine (D),
and powered from a power back up system (C) comprising a battery of supercapacitors, connected to a charging system (Z) having a connector connectable to external power supply systems while the ski lift chair is moving,
wherein the heater (G) is connected to the charging system (Z) and to the power back up system (C) via a circuit comprising a controlled key (L) connected to the measurement-control system (M).

2. The ski lift chair according to claim 1, **characterised in that**, it has a resistance wire, provided in the region (H), connected to the power back up (C) via a second key controlled by the measurement-control system (M).

3. The ski lift chair according to claim 1 or 2, **characterised in that**, the chamber (K) is placed under the seat (S).

4. The ski lift chair according to claim 1 or 2, **characterised in that**, the chamber (K) is placed behind the seat back.

5. A method for controlling a heating system of a ski lift chair to maintain a set temperature, **characterised in that** the ski lift chair is the ski lift chair as defined in any of claims from 1 to 4, wherein measurement-control system (M)
reads a temperature from a first sensor (T1) and a second sensor (T2) and
switches the engine (D) on, when the reading of the temperature from the first temperature sensor (T1) is higher than a pre-defined value, whereas the reading from the second temperature sensor (T2) is lower than the set temperature.

## Patentansprüche

1. Schiliftsessel umfassend einen Sitz (S) mit einer Rückenlehne und einen Sicherheitsbügel (R), ausgestattet mit einem Heizsystem mit einem elektrischen Heizer (G), **dadurch gekennzeichnet, dass**
das Heizsystem mit einem Kanal (P) ausgestattet ist, der ein Gebläse umfasst, das von einem Antrieb (D) angetrieben wird, und besagter Kanal (P) verläuft innerhalb wenigstens eines Abschnitts des Sicherheitsbügels (R) entlang eines Bereichs (H), der eingerichtet ist, um Hände abzustützen,
der Heizer (G) in einer Kammer (K) angeordnet ist, die ein Medium mit hoher Wärmekapazität umfasst, wobei entlang besagter Kammer (K) der Kanal (P) verläuft, welcher wenigstens ein bimetallisches thermisches Ventil aufweist,
er in der Kammer (K) ein erster Temperatursensor (T1) aufweist,
er dem Bereich (H) ein zweiter Temperatursensor (T2) aufweist,
und ferner das Heizsystem mit einem Mess-Steuer-System (M) ausgestattet ist, das
mit dem ersten Temperatursensor (T1), mit dem zweiten Temperatursensor (T2) und dem Antrieb (D) verbunden ist,
und durch ein Energie-Back-up-System (C) versorgt wird, das eine Batterie von Superkapazitäten umfasst, die mit einem Aufladesystem (Z) verbunden sind, das ein Verbindungsstück aufweist, das mit externen Energieversorgungssystemen verbindbar ist, während sich der Schiliftsessel bewegt,
wobei der Heizer (G) mit dem Aufladesystem (Z) und dem Energie-Back-up-System (C) über einen Schaltkreis verbunden ist, der einen gesteuerten Schalter (L) umfasst, der mit dem Mess-Steuer-System (M) verbunden ist.

2. Schiliftsessel gemäß Anspruch 1, **dadurch gekennzeichnet, dass** er einen Widerstandsdraht aufweist, der in dem Bereich (H) vorgesehen ist und der mit dem Energie-Back-up-System (C) über einen zweiten Schalter verbunden ist, der von dem Mess-Steuer-System (M) gesteuert wird.

3. Schiliftsessel gemäß Anspruch 1 oder 2, **dadurch gekennzeichnet, dass** die Kammer (K) unter dem Sitz (S) angeordnet ist.

4. Schiliftsessel gemäß Anspruch 1 oder 2, **dadurch gekennzeichnet, dass** die Kammer (K) hinter der Rückenlehne angeordnet ist.

5. Verfahren zum Steuern eines Heizsystems eines Schiliftsessels, um eine festgelegte Temperatur aufrechtzuerhalten, **dadurch gekennzeichnet, dass** der Schiliftsessel der wie in einem der Ansprüche 1 bis 4 definierte Schiliftsessel ist, wobei das Mess-Steuer-System (M)
eine Temperatur aus dem ersten Temperatursensor (T1) und dem zweiten Temperatursensor (T2) ausließt und
den Antrieb (D) einschaltet, wenn die Auslesung der Temperatur aus dem ersten Temperatursensor (T1) höher ist als ein vordefinierter Wert, wobei die Auslesung aus dem zweiten Temperatursensor (T2) geringer als die festgelegte Temperatur ist.

## Revendications

1. Fauteuil de remontée mécanique qui comprend un siège (S) muni d'un dossier de siège et un rail (R), équipé d'un système de chauffage qui comporte un dispositif de chauffage électrique (G), **caractérisé en ce que** :
le système de chauffage est équipé d'un canal (P) qui comprend un ventilateur actionné par un moteur (D) et ledit canal (P) s'étend à l'intérieur d'au moins une partie du rail (R) en passant par une zone (H) qui est conçue pour procurer un support aux mains ;
le dispositif de chauffage (G) est placé dans une chambre (K) qui comprend un milieu jouissant d'une capacité calorifique élevée ; dans lequel, à travers ladite chambre (K), s'étend le canal (P) qui possède au moins une soupape thermique bimétallique ;
dans la chambre (K), il est prévu un premier capteur de la température (T1) ;
dans la zone (H), il est prévu un deuxième capteur de la température (T2) ; et
en outre le système de chauffage est équipé d'un système de mesure et de commande (M) qui est relié au premier capteur de la température (T1), au deuxième capteur de la température (T2) et au moteur (D), et qui est entraîné à partir d'un système d'alimentation de secours (C) qui comprend une batterie de supercondensateurs qui est reliée à un système de charge (Z) possédant un raccord qui peut être relié à des systèmes d'alimentation externes tandis que le fauteuil de remontée mécanique est en mouvement ; dans lequel
le dispositif de chauffage (G) est raccordé au système de charge (Z) et au système d'alimentation de secours (C) par l'intermédiaire d'un circuit qui comprend une clé commandée (L) qui est reliée au système de mesure et de commande (M).

2. Fauteuil de remontée mécanique selon la revendication 1, **caractérisé en ce qu'**il possède une résistance chauffante, qui est prévue dans la zone (H), reliée à l'alimentation de secours (C) par l'intermédiaire d'une deuxième clé commandée par le système de mesure et de commande (M).

3. Fauteuil de remontée mécanique selon la revendication 1 ou 2, **caractérisé en ce que** la chambre (K) est placée en dessous du siège (S).

4. Fauteuil de remontée mécanique selon la revendication 1 ou 2, **caractérisé en ce que** la chambre (K) est placée derrière le dossier du siège.

5. Procédé destiné à la commande d'un système de chauffage d'un fauteuil de remontée mécanique pour le maintien d'une température déterminée, **caractérisé en ce que** le fauteuil de remontée mécanique représente le fauteuil de remontée mécanique tel qu'il a été défini dans l'une quelconque des revendications 1 à 4 ; dans lequel un système de mesure et de commande (M) lit une température émise à partir d'un premier capteur (T1) et à partir d'un deuxième capteur (T2) et met le moteur (D) sous tension lorsque la lecture de la température fournie par le premier capteur de la température (T1) est supérieure à une valeur prédéfinie, tandis que la lecture fournie par le deuxième capteur de la température (T2) est inférieure à la température établie.
